# EUROPEAN PATENT APPLICATION

(11) **EP 2 337 201 A1**
(43) Date of publication of application: **22.06.2011**
(21) Application number: 10015834.4
(22) Date of filing: 20.12.2010
(51) Int. Cl.: H02M 3/156, H02M 3/158

(54) **Clean transition between CCM and DCM in valley current mode control of DC-to-DC converter**

(30) Priority: 18.12.2009 US 642542
(71) Applicant: Linear Technology Corporation, Milpitas, CA 95035-7417 (US)
(72) Inventor: Gu, Yiding (Eric), Pleasanton, CA 94588 (US); Ren, Hong, San Jose, CA 95131 (US)
(74) Representative: Müller-Boré & Partner Patentanwälte

(57) **Abstract**

A valley current mode DC-to-DC converter may include an electronic control system configured to cause the DC-to-DC converter to operate under a continuous current mode and a discontinuous current mode. The electronic control system may include a current sensing system (509,511) configured to sense current traveling through an inductance (501), a dual threshold generator (523) configured to generate a first (V1) and a different second threshold (V2), and a comparator system (517,518) configured to compare current sensed by the current sensing system (511,509) with the first threshold (V1) when the DC-to-DC converter is operating in the continuous current mode and with the second threshold (V2) when the DC-to-DC converter is operating in the discontinuous current mode.

## Description

### Background

### TECHNICAL FIELD

This disclosure relates to DC-to-DC converters which use valley current mode control.

### DESCRIPTION OF RELATED ART

Switching DC-to-DC converters may regulate output voltage by cyclically delivering energy during a regulated duty cycle into an inductor using a switching network. The duty cycle may be regulated to keep the output voltage constant, notwithstanding variation in the load and/or input voltage.

Current-mode control has been used to regulate the duty cycle. One type of current mode control is known as valley current mode control. Current sensing may take place during the interval of the down slope of current through the inductor or the Bottom MOSFET.

The controller may at times cause the DC-to-DC converter to operate in a continuous current mode ("CCM") during which current may always be flowing through the inductor. The controller may at other times cause the DC-to-DC converter to operate in a discontinuous current mode ("DCM") during which current may cease flowing through the inductor during a portion of each cycle. Whether the DC-to-DC converter operates in the CCM or DCM mode may depend upon the load, the difference between the input and desired output voltage, as well as other factors.

Transitions between these two modes of operation may cause instability and associate noise in the output of the converter.

### SUMMARY

A valley current mode DC-to-DC converter may include an inductance having a first and a second connection, a capacitance coupled to the second connection of the inductance and configured to filter voltage at the second connection, an electronic switching system coupled to the first connection of the inductance and configured to controllable couple the first connection to a voltage source, and an electronic control system.

The electronic control system may be configured to control the electronic switching system and to cause the electronic switching system to cause the DC-to-DC converter to operate under certain conditions in a continuous current mode and under certain other conditions in a discontinuous current mode.

The electronic control system may include a current sensing system configured to sense current traveling through the inductance, a dual threshold generator configured to generate a first and a different second threshold, and a comparator system configured to compare the current sensed by the current sensing system with the first threshold when the DC-to-DC converter is operating in the continuous current mode and with the second threshold when the DC-to-DC converter is operating in the discontinuous current mode.

These, as well as other components, steps, features, objects, benefits, and advantages, will now become clear from a review of the following detailed description of illustrative embodiments, the accompanying drawings, and the claims.

### BRIEF DESCRIPTION OF DRAWINGS

The drawings disclose illustrative embodiments. They do not set forth all embodiments. Other embodiments may be used in addition or instead. Details that may be apparent or unnecessary may be omitted to save space or for more effective illustration. Conversely, some embodiments may be practiced without all of the details that are disclosed. When the same numeral appears in different drawings, it refers to the same or like components or steps.

FIG. 1 illustrates a prior art DC-to-DC converter which uses valley current mode control.

FIG. 2 illustrates current which may flow through the inductor in the DC-to-DC converter illustrated in FIG. 1 when the converter is operating in a continuous current mode, such as when the load on the converter is heavy.

FIG. 3 illustrates current which may flow through the inductor in the DC-to-DC converter illustrated in FIG. 1 when the converter is operating in a discontinuous current mode, such as when the load on the converter is light.

FIG. 4 illustrates current which may flow through the inductor in the DC-to-DC converter illustrated in FIG. 1 when the converter is at a transition between the continuous current mode and the discontinuous current mode, such as when the load on the converter is moderate.

FIG. 5 illustrates a DC-to-DC converter which uses valley current mode control and which alters the threshold in a reverse current comparison system based on the operational mode of the DC-to-DC converter.

FIG. 6 illustrates current which may flow through the inductance in the DC-to-DC converter illustrated in FIG. 5 when the converter is transitioning from a continuous current mode to a discontinuous current mode, such as when the load on the converter lightens.

### DETAILED DESCRIPTION OF ILLUSTRATIVE EMBODIMENTS

Illustrative embodiments are now discussed. Other embodiments may be used in addition or instead. Details that may be apparent or unnecessary may be omitted to save space or for a more effective presentation. Conversely, some embodiments may be practiced without all of the details that are disclosed.

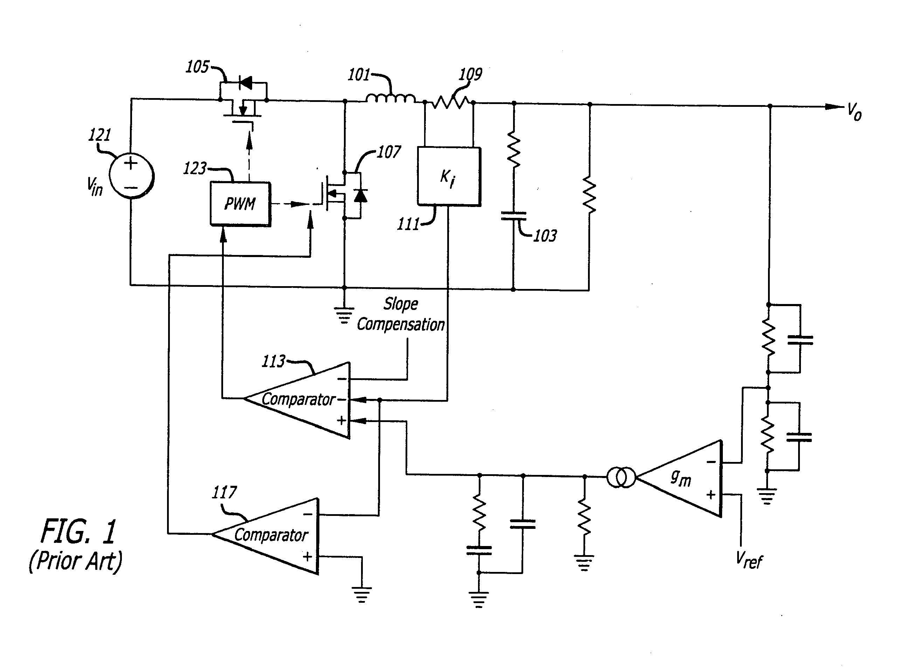

FIG. 1 illustrates a prior art DC-to-DC converter which uses valley current mode control.

As illustrated in FIG. 1, the prior art DC-to-DC converter may include an inductor 101, a capacitor 103, an electronic switching system which may include electronic switches 105 and 107, an electronic control system which may include a current sensing system which may include a resistor 109 and a scaler 111, a comparator system which may include a forward current comparator 113 and a reverse current comparator 117, and a pulse-width modulator 123. As illustrated in FIG. 1, the prior art DC-to-DC converter may include other components, such as components that may provide network compensation.

The electronic switch 105 may be configured to controllably couple the inductor 101 to a voltage source 121. The electronic switch 107 may be configured to controllably couple the inductor 101 to a ground.

A pulse-width modulator 123 in conjunction with the forward current comparator 113, the reverse current comparator 117, and other components may be configured to provide current mode control for the DC-to-DC converter. They may be configured to provide valley current mode control which may cause changes in the states of the electronic switches 105 and/or 107 to occur during the down (valley) slope of current running through the inductor 101.

These components may be configured to cause the DC-to-DC converter to operate at times in a continuous current mode (CCM) and at other times in a discontinuous current mode (DCM). In the continuous current mode, current through the inductor 101 may flow during all parts of each cycle. In the discontinuous current mode, current may cease flowing through the inductor 101 for a portion of each cycle.

Both the forward current comparator 113 and the reverse current comparator 117 may be configured to sense the down (valley) slope of the inductor current. The forward current comparator 113 may be configured to turn on the electronic switch 105 and to turn off the electronic switch 107 through cooperative efforts with the pulse-width modulator 123. The reverse current comparator 117 may be configured to override the pulse-width modulator and to turn off the electronic switch 107. The reverse current comparator 117 may be configured to do so as soon as the inductor current drops to zero and starts to reverse.

The boundary between CCM and DCM may be unpredictable, along with the waveform of the current through the inductor 101 during a boundary condition. This may cause an increase in noise as the system transitions between CCM and DCM. This may be attributable to a race condition between the forward current comparator 113 and the reverse current comparator 117 at the boundary when the inductor current just starts to reverse. When the electronic switch 107 is turned off, moreover, this may cause a ground bounce due to discharging capacitance in the electronic switch 107. These sources of noise may cause an undesirable forward current comparator performance and may result more ripple in the output of the converter V_{O}.

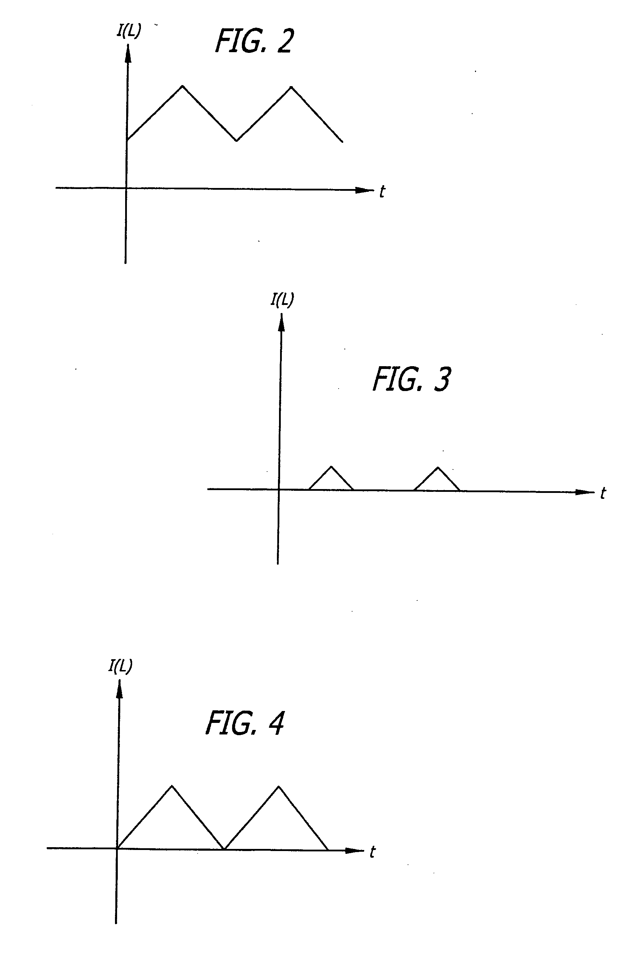

FIGS. 2-4 illustrate these modes of operation.

FIG. 2 illustrates current which may flow through the inductor in the DC-to-DC converter illustrated in FIG. 1 when the converter is operating in a continuous current mode, such as when the load on the converter is heavy. As illustrated in FIG. 2, the current through the inductor 101 may vary, but may be continuous. During this continuous current mode, the forward current comparator 113 may alone be responsible for turning on/off the electronic switches 105/107. Also during this continuous current mode, the reverse current comparator 117 may not generate any output.

FIG. 3 illustrates current which may flow through the inductor in the DC-to-DC converter illustrated in FIG. 1 when the converter is operating in a discontinuous current mode, such as when the load on the converter is light. As illustrated in FIG. 3, the current through the inductor may be discontinuous in that it may cease to flow during a portion of each cycle. While in this mode, the reverse current comparator 117 may function to turn off the electronic switch 107 each time the current drops to zero and begins to reverse.

FIG. 4 illustrates current which may flow through the inductor in the DC-to-DC converter illustrated in FIG. 1 when the converter is at a transition between the continuous current mode and the discontinuous current mode, such as when the load on the converter is moderate. While at this boundary, both the forward current comparator 113 and the reverse current comparator 115 may potentially change state and there may be instability as to which of these change state. A ground bounce may also be injected into the system each time the electronic switch 107 is turned off. This instability and ground bounce may inject noise into the system which may cause more ripple in the output V_{O}.

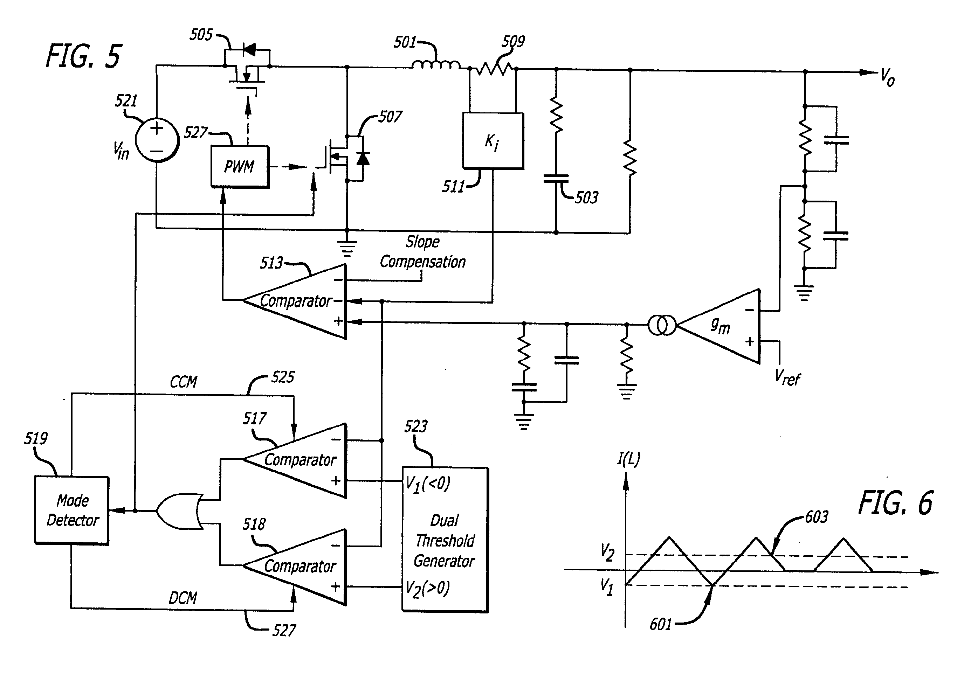

FIG. 5 illustrates a DC-to-DC converter which uses valley current mode control and which alters the threshold in a reverse current comparison system based on the operational mode of the DC-to-DC converter.

The DC-to-DC converter which is illustrated in FIG. 5, may include an inductance 501, a capacitance 503, an electronic switching system which may include an electronic switch 505 and an electronic switch 507, and an electronic control system. The electronic control system may include a current sensing system which may include a sensing resistance 509 and a scaler 511, a comparison system which may include a forward current comparator 513 and a set of reverse current comparators 517 and 518, a mode detector 519, a dual threshold generator 523, and a pulse-width modulator 527. The DC-to-DC converter may also include other components which may be configured to provide network compensation or other functions, as also illustrated in FIG. 5.

The inductance 501 may include one or more inductors connected in any configuration.

The capacitance 503 may be configured to filter voltage at the output of the DC-to-DC converter and may include one or more capacitors connected in any configuration.

The electronic switching system may be coupled to the inductance 501. The electronic switching system may be configured to controllably couple the inductance 501 to a voltage source 521. Any number or type of electronic switches may be used in the electronic switching system, such as one or more BJTs, FETs, MOSFETs and/or diodes. As used herein, the word "couple" is intended to embrace both a direct coupling which involves no intervening components and an indirect coupling which may involve intervening components, such as a current sensing resistance.

The electronic control system may be configured to control the electronic switching system and to cause the electronic switching system to cause the DC-to-DC converter to operate under certain conditions in a continuous current mode and under certain other conditions in a discontinuous current mode. The components of the electronic control system may be different from those illustrated in FIG. 5.

The current sensing system may be configured to sense current traveling through the inductance 501.

The mode detector 519 may be configured to detect and indicate whether the DC-to-DC converter is operating in the continuous or the discontinuous current mode. The mode detector 519 may utilize any components or combination of components and may receive and process any type of signal or signals to determine the operational mode of the DC-to-DC converter. For example, the mode detector may receive signals from the reverse current comparators 517 and 518, as illustrated in FIG. 5. The mode detector 519 may include a clocked memory, such as a clocked latch, that may clock in the logical OR of these signals, causing the output of the clocked memory device to reflect the mode of the DC-to-DC converter The forward current comparator 513 output itself may serve as such clock to latch the mode changing event.

The mode detector 519 may provide complementary outputs, one connected to an activation input 525 of the reverse current comparator 517, the other connected to an activation input 527 of the reverse current comparator 518. When detecting a continuous current mode, the complementary output of the mode detector 519 which is connected to the reverse current comparator 517 may cause the reverse current comparator 517 to be active. Similarly, when the mode detector 519 detects Discontinuous mode, the other complementary output of the mode detector 519 which is connected to the reverse current comparator 518 may cause the reverse current comparator 518 to be active. In other words, the mode detector 519 may be configured to activate the reverse current comparator 517 during the continuous current mode and the reverse current comparator 518 during the discontinuous mode.

The dual threshold generator 523 may be configured to generate a first and a different second threshold, denominated as V₁ and V₂, respectively. The first threshold and the second threshold may have opposite polarities. For example, the first threshold may have a negative value and the second threshold may have a positive value.

The first and the second thresholds may provide a comparison hysteresis which reduces fluctuation in the output of the DC-to-DC converter due to noise occurring when the DC-to-DC converter transitions between the continuous current mode and the discontinuous current mode. The gap between the first and the second thresholds may be larger than the noise in the current sensed by the current sensing system. As indicated above, this noise may be generated as the DC-to-DC converter transitions between the continuous current mode and the discontinuous current mode.

The net effect of the configuration illustrated in FIG. 5 may be to cause the reverse current comparator 517 to compare the current sensed by the current sensing system with the V₁ threshold during the continuous current mode, and to cause the reverse current comparator 518 to compare the current sense by the current sensing system with the threshold V₂ during the discontinuous mode. The reverse current comparison system may therefore have two thresholds, a positive threshold that is above the zero current level and a negative threshold that is below the zero current level.

When the current through the inductance 501 is ramping down, the reverse current comparator 517 may not make the decision to turn off the electronic switch 507 until the negative threshold is reached. This may insure that the current through the inductance 501 is truly passing the zero current level and is firmly reversing.

Once the DC-to-DC converter returns to the continuous current mode, the reverse current comparator 518 may be activated by the mode detector 519 and may require the current through the inductance 501 to fall to a positive level as it is ramping down before it is triggered. This hysteresis between thresholds evaluated by the reverse current comparison system may ensure a smooth transition between CCM and DCM. It may also cause the electronic switch 507 to turn off well before the forward current comparator decides whether to turn on the electronic switch 505. This may eliminate the race condition discussed above and immunize the electronic control system from noise created by the electronic switch 507 turning off.

FIG. 6 illustrates current which may flow through the inductance in the DC-to-DC converter illustrated in FIG. 5 when the converter is transitioning from a continuous current mode to a discontinuous current mode, such as when the load on the converter lightens. When the inductor current is well above the reverse current comparator thresholds V1 and V2, none of the reverse current comparators may trigger. The mode detector 519 may detect this condition and initialize the output of the mode detector 519 to be in CCM, which may activate reverse current comparator 517 and deactivate reverse current comparator 518. The reverse current comparator 517 may trigger when the current through the inductance 501 falls to the first threshold V₁ at a point 601. At this moment, the reverse current comparator 517 may trigger and mode detector 519 may remember this event and activate the reverse current comparator 518 and deactivate the reverse current comparator 517. The reverse current comparator 518 may now trigger when the current falls below the second threshold V₂ at a point 603. The change of thresholds may provide the hysteresis necessary to reject noise and also enough time for the forward current comparator 513 to decide when to turn on the MOSFET 505 again. The mode detector 519 may change state to its original state of CCM mode only when the reverse current comparator 518 no longer triggers. This may happen when the output load increases to a certain point. At that point, the cycle may repeat itself as described.

The components, steps, features, objects, benefits and advantages that have been discussed are merely illustrative. None of them, nor the discussions relating to them, are intended to limit the scope of protection in any way. Numerous other embodiments are also contemplated. These include embodiments that have fewer, additional, and/or different components, steps, features, objects, benefits and advantages. These also include embodiments in which the components and/or steps are arranged and/or ordered differently.

For example, the reverse current comparison system may consist of only a single comparator, rather than two comparators. In this instance, the input to the single comparator may be multiplexed between the two different thresholds.

The thresholds to the reverse current comparator may be externally programmed by the user to suit any particular application. The location and/or technique for sensing current in the inductor may also vary.

Unless otherwise stated, all measurements, values, ratings, positions, magnitudes, sizes, and other specifications that are set forth in this specification, including in the claims that follow, are approximate, not exact. They are intended to have a reasonable range that is consistent with the functions to which they relate and with what is customary in the art to which they pertain.

References to "inductance" and "capacitance" are intended to be a shorthand notation for references to one or more components which provide inductance and capacitance, respectively.

All articles, patents, patent applications, and other publications which have been cited in this disclosure are hereby incorporated herein by reference.

The phrase "means for" when used in a claim is intended to and should be interpreted to embrace the corresponding structures and materials that have been described and their equivalents. Similarly, the phrase "step for" when used in a claim is intended to and should be interpreted to embrace the corresponding acts that have been described and their equivalents. The absence of these phrases in a claim mean that the claim is not intended to and should not be interpreted to be limited to any of the corresponding structures, materials, or acts or to their equivalents.

Nothing that has been stated or illustrated is intended or should be interpreted to cause a dedication of any component, step, feature, object, benefit, advantage, or equivalent to the public, regardless of whether it is recited in the claims.

The scope of protection is limited solely by the claims that now follow. That scope is intended and should be interpreted to be as broad as is consistent with the ordinary meaning of the language that is used in the claims when interpreted in light of this specification and the prosecution history that follows and to encompass all structural and functional equivalents.

An aspect of the present invention may relate to an electronic control system for a valley current mode DC-to-DC converter which includes an inductance having a first and a second connection, a capacitance coupled to the second connection of the inductance and configured to filter voltage at the second connection, and an electronic switching system coupled to the first connection of the inductance and configured to controllable couple the first connection to a voltage source, wherein the electronic control system:
is configured to control the electronic switching system and to cause the electronic switching system to cause the DC-to-DC converter to operate under certain conditions in a continuous current mode and under certain other conditions in a discontinuous current mode, and
includes:
   a current sensing system configured to sense current traveling through the inductance;
a dual threshold generator configured to generate a first and a different second threshold; and
a comparator system configured to compare the current sensed by the current sensing system with the first threshold when the DC-to-DC converter is operating in the continuous current mode and with the second threshold when the DC-to-DC converter is operating in the discontinuous current mode.

As an example, the electronic control system may be configured that the first threshold and the second threshold have opposite polarities.

As an example, the electronic control system may be configured that the first threshold has a negative value and the second threshold has a positive value.

As an example, the electronic control system may be configured that:
the electronic switching system include a first electronic switch configured to controllably couple the first connection to the inductance to the voltage source and a second electronic switch configured to controllably couple the first connection to the inductance to a ground; and the electronic control system is configured to cause the second switch to open when the current sensed by the current sensing system reaches the first threshold.

As an example, the electronic control system may further comprise a mode detector configured to detect and indicate whether the DC-to-DC converter is operating in the continuous or the discontinuous current mode.

As an example, the electronic control system may be configured that the first and the second thresholds provide a comparison hysteresis which reduces fluctuation in an output of the DC-to-DC converter due to noise occurring when the DC-to-DC converter transitions between the continuous current mode and the discontinuous current mode.

As an example, the electronic control system may be configured that the gap between the first and the second thresholds is larger than noise in the current sensed by the current sensing system that is generated when the DC-to-DC converter transitions between the continuous current mode and the discontinuous current mode.

As an example, the electronic control system may be configured that the comparator system includes at a forward current comparison system configured to compare forward current through the inductance and a reverse current comparison system configured to compare reverse current through the inductance.

As an example the electronic control system of may be configured that the reverse current comparison system includes two comparators, one of which is configured to compare current sensed by the current sensing system with the first threshold, the other of which is configured to compare current sensed by the current sensing system with the second threshold.

## Claims

1. A valley current mode DC-to-DC converter comprising:
an inductance having a first and a second connection;
a capacitance coupled to the second connection of the inductance and
configured to filter voltage at the second connection;
an electronic switching system coupled to the first connection of the inductance and configured to controllable couple the first connection to a voltage source;
and
an electronic control system configured to control the electronic switching system and to cause the electronic switching system to cause the DC-to-DC converter to operate under certain conditions in a continuous current mode and under certain other conditions in a discontinuous current mode, the control system including:
a current sensing system configured to sense current traveling through the inductance;
a dual threshold generator configured to generate a first and a different second threshold; and
a comparator system configured to compare the current sensed by the current sensing system with the first threshold when the DC-to-DC converter is operating in the continuous current mode and with the second threshold when the DC-to-DC converter is operating in the discontinuous current mode.

2. The DC-to-DC converter of claim 1 wherein the first threshold and the second threshold have opposite polarities.

3. The DC-to-DC converter of claims 1 or 2 wherein the first threshold has a negative value and the second threshold has a positive value.

4. The DC-to-DC converter of any one of the preceding claims wherein:
the electronic switching system includes a first electronic switch configured to controllably couple the first connection to the inductance to the voltage source and a second electronic switch configured to controllably couple the first connection to the inductance to a ground; and
the electronic control system is configured to cause the second switch to open when the current sensed by the current sensing system reaches the first threshold.

5. The DC-to-DC converter of any one of the preceding claims further comprising a mode detector configured to detect and indicate whether the DC-to-DC converter is operating in the continuous or the discontinuous current mode.

6. The DC-to-DC converter of any one of the preceding claims wherein the first and the second thresholds provide a comparison hysteresis which reduces fluctuation in an output of the DC-to-DC converter due to noise occurring when the DC-to-DC converter transitions between the continuous current mode and the discontinuous current mode.

7. The DC-to-DC converter of any one of the preceding claims wherein the gap between the first and the second thresholds is larger than noise in the current sensed by the current sensing system that is generated when the DC-to-DC converter transitions between the continuous current mode and the discontinuous current mode.

8. The DC-to-DC converter of any one of the preceding claims wherein the comparator system includes a forward current comparison system configured to compare forward current through the inductance and a reverse current comparison system configured to compare reverse current through the inductance.

9. The DC-to-DC converter of any one of the preceding claims wherein the reverse current comparison system includes two comparators, one of which is configured to compare current sensed by the current sensing system with the first threshold, the other of which is configured to compare current sensed by the current sensing system with the second threshold.

10. An electronic control system for a valley current mode DC-to-DC converter which includes an inductance having a first and a second connection, a capacitance coupled to the second connection of the inductance and configured to filter voltage at the second connection, and an electronic switching system coupled to the first connection of the inductance and configured to controllable couple the first connection to a voltage source, wherein the electronic control system:
is configured to control the electronic switching system and to cause the electronic switching system to cause the DC-to-DC converter to operate under certain conditions in a continuous current mode and under certain other conditions in a discontinuous current mode, and
includes:
a current sensing system configured to sense current traveling through the inductance;
a dual threshold generator configured to generate a first and a different second threshold; and
a comparator system configured to compare the current sensed by the current sensing system with the first threshold when the DC-to-DC converter is operating in the continuous current mode and with the second threshold when the DC-to-DC converter is operating in the discontinuous current mode.

11. The electronic control system of claim 10 wherein the first threshold and the second threshold have opposite polarities.

12. The electronic control system of claims 10 or 11 wherein the first threshold has a negative value and the second threshold has a positive value.

13. The electronic control system of any one of claims 10 to 12 wherein:
the electronic switching system includes a first electronic switch configured to controllably couple the first connection to the inductance to the voltage source and a second electronic switch configured to controllably couple the first connection to the inductance to a ground; and
the electronic control system is configured to cause the second switch to open when the current sensed by the current sensing system reaches the first threshold.

14. The electronic control system of any one of claims 10 to 13 further comprising a mode detector configured to detect and indicate whether the DC-to-DC converter is operating in the continuous or the discontinuous current mode.

15. The electronic control system of any one of claims 10 to 14 for a valley current mode DC-to-DC converter according to any one of the preceding claims 6 to 9.
